Europäisches Patentamt

**European Patent Office**

**Office européen des brevets**

(19)

(11) **EP 1 405 036 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(21) Anmeldenummer: **02747432.9**

(22) Anmeldetag: **24.06.2002**

(51) Int Cl.$^7$: **G01B 21/04**, G05B 19/401

(86) Internationale Anmeldenummer:
**PCT/EP2002/007011**

(87) Internationale Veröffentlichungsnummer:
**WO 2003/002938 (09.01.2003 Gazette 2003/02)**

(54) **VERFAHREN ZUM BETREIBEN EINES KOORDINATENMESSGERÄTS MIT EINEM DREH-SCHWENK-GELENK**

METHOD FOR OPERATING A CO-ORDINATE MEASURING DEVICE WITH A ROTATING-PIVOTING HINGE

PROCEDE POUR ACTIONNER UN APPAREIL DE MESURE DE COORDONNEES COMPORTANT UNE ARTICULATION TOURNANTE-PIVOTANTE

(84) Benannte Vertragsstaaten:
**DE FR GB IT**

(30) Priorität: **29.06.2001 DE 10131160**

(43) Veröffentlichungstag der Anmeldung:
**07.04.2004 Patentblatt 2004/15**

(73) Patentinhaber: **Carl Zeiss Industrielle Messtechnik GmbH**
**73447 Oberkochen (DE)**

(72) Erfinder: **STUMPP, Ernst**
**89551 Königsbronn (DE)**

(74) Vertreter: **Köllner, Malte et al**
**Köllner & Partner**
**Patentanwälte**
**Kennedyallee 109**
**60596 Frankfurt am Main (DE)**

(56) Entgegenhaltungen:
**US-A- 4 722 063        US-A- 4 901 253**
**US-A- 5 198 990        US-A- 6 134 506**

• **PATENT ABSTRACTS OF JAPAN vol. 014, no. 177 (M-0960), 9. April 1990 (1990-04-09) & JP 02 030477 A (NACHI FUJIKOSHI CORP), 31. Januar 1990 (1990-01-31)**
• **PATENT ABSTRACTS OF JAPAN vol. 012, no. 079 (P-676), 12. März 1988 (1988-03-12) & JP 62 218808 A (TOKYO BOEKI KK), 26. September 1987 (1987-09-26)**

EP 1 405 036 B1

**Beschreibung**

Koordinatenmessgeräte (KMG) spielen eine zentrale Rolle bei der Qualitätskontrolle in Fertigungsprozessen.

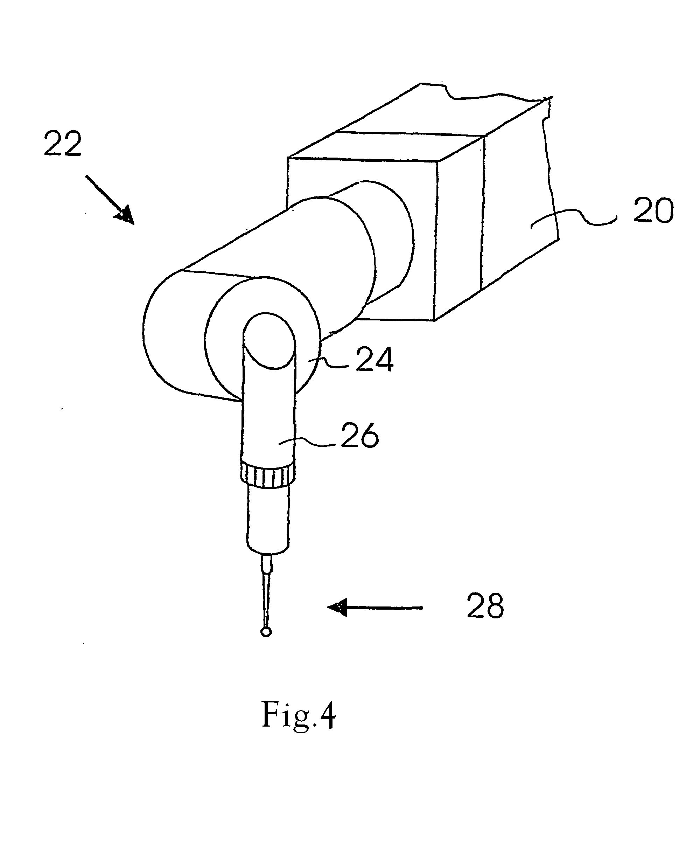

Überwiegend findet man zwei Arten von KMG: KMG mit einem messenden Tastkopf und KMG mit einem schaltenden Tastkopf, der häufig an einem zwei- oder mehrachsigen, rastenden oder kontinuierlichen Dreh-Schwenk-Gelenk aufgehängt ist, das schematisch in Fig. 4 dargestellt ist.

Fig. 4 zeigt einen Auslegearm 20 eines KMG vom Ständertyp. An dem Auslegearm befindet sich ein zweiachsiges Dreh-Schwenk-Gelenk 22 mit einer Taststiftwechseleinrichtung 24. An der Taststiftwechseleinrichtung ist ein schaltender Messkopf 26 montiert, an dessen Spitze sich ein gerader Taststift 28 befindet.

Die rastenden Dreh-Schwenk-Gelenke leiten ihren Namen daraus her, dass sie bei ihren Drehungen und Schwenks nicht jede beliebige Winkelstellung einnehmen können, sondern alle 7,5° rasten, d. h. nur 48 Winkelstellungen auf 360° einnehmen können.

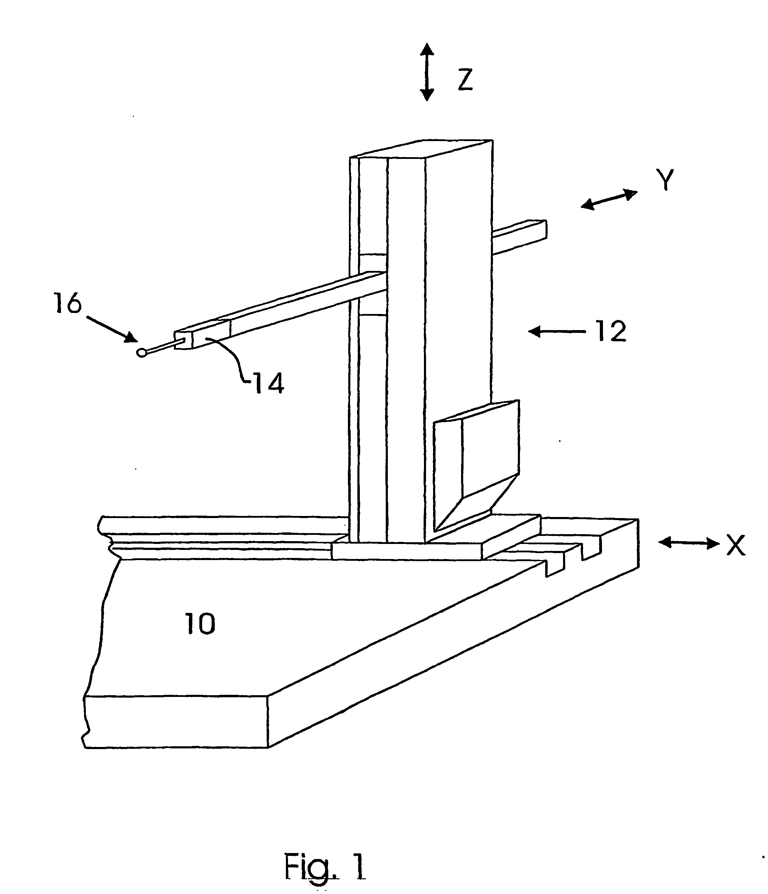

Die Dreh-Schwenk-Gelenke befinden sich z. B. an einem Auslegerarm (Pinole) eines Ständermessgeräts. Als Taststifte werden üblicherweise nur gerade Taststifte eingesetzt und keine Taststiftkombinationen, da das Dreh-Schwenk-Gelenk für die nötige Winkelausrichtung sorgen kann. Ein typisches KMG vom Ständertyp mit einem schaltenden Tastkopf an einem zweiachsigen, rastenden Dreh-Schwenk-Gelenk ist in Fig. 1 gezeigt.

Fig. 1 zeigt einen Messtisch 10 zur Aufnahme eines zu vermessenden Werkstücks. Auf dem Messtisch 10 befindet sich ein Ständer 12, der in drei Achsen, x, y und z, verschiebbar ist. Am Ende des horizontalen Arms (y-Achse) über dem Messtisch 10 ist ein Dreh-Schwenk-Gelenk 14 montiert. Das Dreh-Schwenk-Gelenk 14 weist eine Tasterwechseleinrichtung (nicht sichtbar) zur Aufnahme eines Aufnahmetellers mit einem Taststift 16 auf, mit dessen Hilfe das Werkstück angetastet wird.

Zum Erreichen der gewünschten Genauigkeit im Mikrometer-Bereich müssen die verwendeten Taststifte (und Dreh-Schwenk-Gelenke) kalibriert werden. Dies erfolgt an einem Kalibriernormal, z. B. einer Kalibrierkugel. Durch die Kalibrierung wird der relative räumliche Bezug zwischen dem KMG bzw. dem Taststift - genauer dem Mittelpunkt der Tastkugel an der Spitze des Taststifts - und z. B. dem Kalibriernormal als Referenz ermittelt. Diese Messwerte dienen als Referenz für die durchzuführenden Längen- und Positionsmessungen, d. h. für die Bestimmung der Abmessungen von Werkstücken. Bei der Kalibrierung wird insbesondere der Durchmesser der Tastkugel bestimmt. Der Durchmesser der Kalibrierkugel ist bekannt. Dieses Verfahren ist beispielsweise in JP-A-62 218 808 beschrieben.

Für CNC-Messabläufe (CNC = computer numerical control), also für automatisch gesteuerte Messabläufe, werden eine Reihe von Winkelstellungen benötigt, um alle Punkte des zu vermessenden Objekts antasten zu können. Jede benötigte Winkelstellung der Drehachsen eines Dreh-Schwenk-Gelenks muss dabei gesondert kalibriert werden, da von einer Winkelstellung nicht mit hinreichender Genauigkeit auf eine andere geschlossen werden kann.

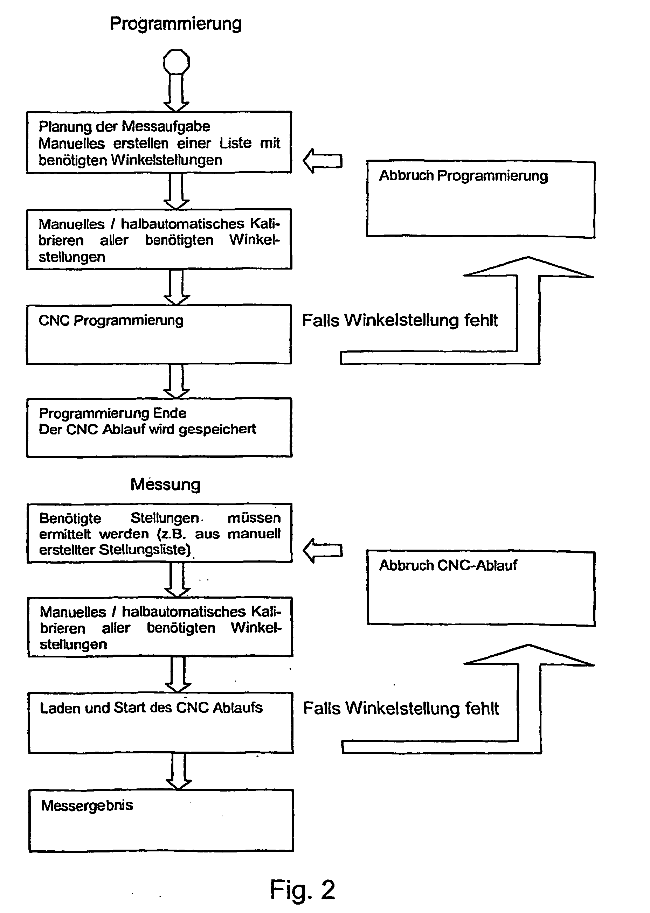

Dazu war es bisher nötig (siehe Fig. 2), bei der Planung alle benötigten Winkelstellungen manuell festzulegen.

Anschließend mussten alle Winkelstellungen manuell an einer Kalibrierkugel kalibriert werden, in der Regel mittels einer Joystick-Steuerung. Dabei wurde die Kalibrierkugel zunächst in Richtung (Normalenrichtung) des Taststifts (z-Richtung) angetastet. Zusätzlich müssen mindestens vier Punkte am Äquator der Kalibrierkugel angetastet werden, um Kräfte in allen Raumrichtungen zu kalibrieren und die Position der Kalibrierkugel möglichst genau zu bestimmen, d. h. es wird in +x, -x, +y und -y Richtung am Äquator der Kalibrierkugel angetastet, um alle Maße und Verformungskräfte ermitteln zu können. Diese Kalibrierung ist auch halbautomatisch möglich. Dabei wird manuell lediglich die z-Richtung angetastet. Die Maschine nimmt automatisch drei weitere Punkte in der Nähe des manuellen Antastpunkts auf. Aus diesen Antastungen wird näherungsweise die Flächennormale und die Lage der Kalibrierkugel berechnet. Die Punkte am Äquator können dann mit Hilfe des bekannten Durchmessers der Kalibrierkugel automatisch angetastet und bestimmt werden. Die Ergebnisse werden im Computer erfasst.

Daran schließt sich die eigentliche CNC-Programmierung oder Lernprogrammierung an, d. h. die Programmierung des CNC-Ablaufs. Dabei werden alle für die Vermessung eines Werkstücks mit dem Taststift in einem CNC-Ablauf benötigten Stellungen der Ständer- bzw. Portalmechanik und alle Winkelstellungen des Dreh-Schwenk-Gelenks durch Antasten an den gewünschten Punkten des Werkstücks an einem exemplarischen Werkstück im Computer gespeichert. Die Programmierung erfolgt mittels in allen benötigten Winkelstellungen kalibrierter Taststifte, da sonst die räumliche Lage des Antastpunkts nicht ermittelt werden kann.

Wurde eine Winkelstellung bei der Planung vergessen und daher nicht kalibriert, musste die Programmierung abgebrochen werden und diese Winkelstellung zunächst kalibriert werden.

Jeder Taststift muss stets in allen Winkelstellungen manuell oder halbautomatisch kalibriert werden. Auch hier durfte keine Winkelstellung bei der Kalibrierung vergessen werden, da sonst der Messablauf für eine Nachkalibrierung unterbrochen werden musste. Erst danach konnte der für die Vermessung weiterer Werkstücke benötigte CNC-Ablauf mit Hilfe der ermittelten Kalibrierdaten durchgeführt werden.

Aufgabe der Erfindung ist es, das Betreiben eines Koordinatenmessgeräts mit einem Dreh-Schwenk-Gelenk zu erleichtern.

Diese Aufgabe wird durch die Erfindungen gemäß den unabhängigen Ansprüchen gelöst. Vorteilhafte Weiterbildungen der Erfindungen sind in den abhängigen Ansprüchen gekennzeichnet.

Die Figuren zeigen:

Fig. 1 zeigt einen schematischen Aufbau eines Koordinatenmessgeräts vom Ständertyp;

Fig. 2 zeigt einen Ablaufplan einer Programmierung und einer Messung eines CNC-Ablaufs nach dem Stand der Technik;

Fig. 3 zeigt einen Ablaufplan einer Programmierung und einer Messung eines CNC-Ablaufs gemäß der Erfindung;

Fig. 4 zeigt ein Dreh-Schwenk-Gelenk mit einem Taststift; und

Fig. 5 zeigt ein einfaches geometrisches Modell eines Dreh-Schwenk-Gelenks.

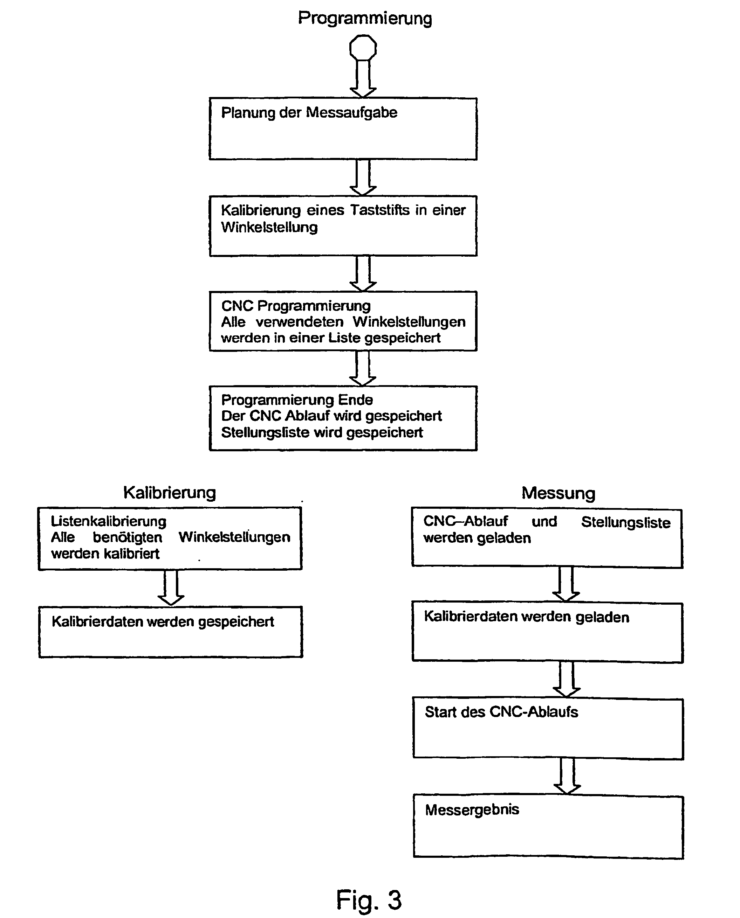

Im Folgenden wird die Erfindung mit Bezug auf Fig. 3 näher erläutert.

Nach der groben Planung der Messaufgabe, gedanklich oder auf Papier oder anderweitig aufgezeichnet, wird eine einzige der geplanten Winkelstellungen für einen Sensor kalibriert, z. B. die Winkelstellung 0 / 0. Die Kalibrierung kann manuell oder vorzugsweise halbautomatisch erfolgen. Als Sensor des KMG kann z. B. ein Taststift oder ein optisches Tastsystem dienen. Bestimmt wird die Lage des Sensors relativ zu einem Referenzpunkt. Der Taststift ist vorzugsweise der Taststift, der später für die geplante Messung eingesetzt werden soll. Es kann jedoch auch ein Taststift sein, der von dem später einzusetzenden verschieden ist.

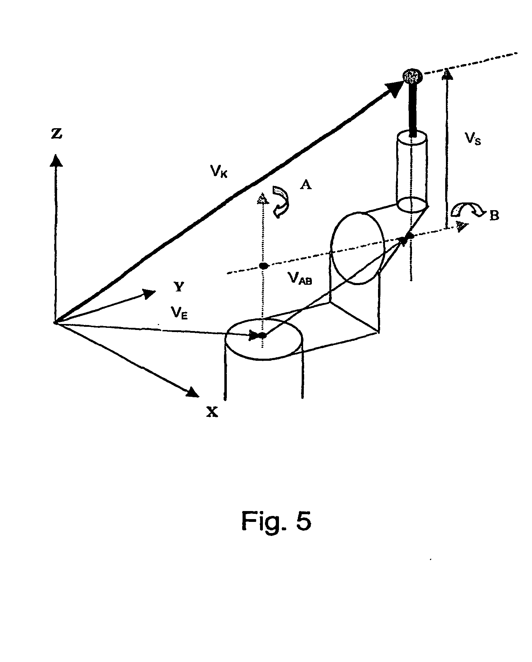

Aus den bei der Kalibrierung gewonnenen Maschinenkoordinaten werden die Positionen z. B. des Taststifts, d. h. die Lage des Mittelpunkts der Tastkugel und der Durchmesser der Tastkugel, bestimmt und die erhaltenen Werte werden gespeichert. Dies erfolgt auf der Grundlage eines geometrischen Modells des Dreh-Schwenk-Gelenks, wie es in Fig. 5 zu sehen ist.

Fig. 5 zeigt ein Koordinatensystem mit einer x-, einer y- und einer z-Achse. Die Achsen dieses Koordinatensystems stimmen vorzugsweise mit den Achsen des Ständers oder des Portals des KMG überein. VE bezeichnet den Einbauvektor für das Dreh-Schwenk-Gelenk. VE ergibt sich aus der Stellung der Achsen des Ständers oder Portals des KMG. Das Dreh-Schwenk-Gelenk ist als Ganzes um die Drehachse A drehbar. Die zugehörige Drehmatrix wird mit MA bezeichnet. Ferner weist das Dreh-Schwenk-Gelenk ein zweites Gelenk zum Schwenken auf. Das zweite Gelenk weist an seinem Ende eine Taststiftwechseleinrichtung zur Aufnahme z. B. eines schaltenden Tastkopfs mit einem Taststift auf. Das zweite Gelenk ermöglicht ein Schwenken des Taststifts um die Drehachse B mit der zugehörigen Drehmatrix MB. Die Drehachsen A und B stehen im Wesentlichen rechtwinklig zueinander. Zwischen beiden Achsen besteht ein Achsversatz von VAB. An diesen Versatzvektor VAB schließt sich der Sensor- oder Taststiftvektor VS an, der die Winkelorientierung und den Abstand des Mittelpunkts der Tastkugel von der Achse B wiedergibt. Insgesamt erhält man aus diesem einfachen Modell für den Vektor VK des Mittelpunkts der Tastkugel:

$$VK = [MA * \{VAB + (MB * VS)\}] + VE$$

Im Prinzip können auch drei und mehr Achsen berücksichtigt werden; es muss das geometrische Modell nur entsprechend erweitert werden. Um die Genauigkeit des Modells zu steigern, könnten auch Taumelfehler und Achsversatz berücksichtigt werden. Ein Vorteil der Erfindung besteht darin, dass derartige Erweiterungen des mathematisch-geometrischen Modells überflüssig sind. Das angegebene einfache Modell reicht völlig aus. Die dafür benötigten Daten können sogar schlicht von Hand mit einem Lineal gemessen werden.

Aus dem sehr genau bekannten Durchmesser der Kalibrierkugel lässt sich der Durchmesser der Tastkugel ermitteln. Durch das geometrische Modell lässt sich die räumliche Position des Bezugspunkts der Dreh-Schwenk-Einheit (VE) bestimmen. Aus der bei der Kalibrierung ermittelten Lage der Kalibrierkugel in Maschinenkoordinaten lässt sich die Lage der Tastkugel zu einem Bezugspunkt ermitteln, da die Lage der Kalibrierkugel zu dem Bezugspunkt hinreichend bekannt ist (zumindest die Höhe für eine Messung in einer Winkelstellung senkrecht zum Messtisch), insbesondere, wenn der Mittelpunkt der Kalibrierkugel selbst als Bezugspunkt dient. Damit ist eine Referenz für die folgenden Lagebestimmungen gegeben.

Im Folgenden wird die eigentliche CNC-Programmierung für die Vermessung einer Vielzahl von Werkstücken durchgeführt. Dazu werden alle für die Vermessung eines Werkstücks mit dem bereits kalibrierten Taststift in einem CNC-Ablauf benötigten Positionen und Winkelstellungen bestimmt. Die erhaltenen Werte werden in einer Liste gespeichert. Die Reihenfolge von Kalibrierung und CNC-Programmierung kann vertauscht werden. Die Programmierung erfolgt vorzugsweise durch einen manuell gesteuerten Messablauf, bei dem die geplanten Messpunkte mit Hilfe einer Joystick-Steuerung angetastet werden. Die Position und die Winkelstellung werden dann entweder durch einen gesonderten Knopfdruck oder durch den Schaltvorgang des schaltenden Tastkopfs im Moment des Antastens in die Liste übernommen. Denkbar ist auch eine manuelle Eingabe aller Winkel und Positionen. Zu jeder Winkelstellung gehören stets mindestens ein Paar von Winkelwerten für die beiden Drehachsen des Dreh-Schwenk-Gelenks.

Für die gesamte Programmierung reicht somit die Kalibrierung einer Winkelstellung aus - ganz im Gegensatz zum Stand der Technik, bei dem alle Winkelstellungen für die Programmierung kalibriert werden mussten.

Nach dem Stand der Technik (siehe Fig. 2) musste vor der Lernprogrammierung (CNC-Programmierung) eine möglichst vollständige Liste aller benötigten Winkelstellungen vorhanden sein, und diese Winkel mussten alle kalibriert sein. Ein entscheidender Vorteil der Erfindung besteht darin, dass auf diese vorbereitenden Schritte vor der Lernprogrammierung verzichtet werden kann. Für die Lernprogrammierung muss keine einzige Winkelstellung vorher bekannt sein. Es bedarf keiner vorhergehenden Planung. Die Winkel werden, so wie sie benötigt werden, von Hand mittels eines Joysticks, der den Taststift (oder Sensor) steuert, während der Lernprogrammierung erzeugt. Jeder so erzeugte Winkel wird durch das Antasten als Triggersignal zusammen mit den Stellungen des Messsystems, d. h. der Ständer, gespeichert, sofern er nicht bereits gespeichert ist. Man braucht sich also vor der Lernprogrammierung keine Gedanken über die Winkelstellungen zu machen. Die Winkel werden schlicht aufgenommen und gespeichert. Jeder beliebige Winkel kann verwendet werden. Jeder verwendete Winkel wird übernommen.

Die verwendeten Winkelstellungen brauchen im Moment der Lernprogrammierung auch nicht kalibriert zu sein. Kalibriert werden die gespeicherten Winkelstellungen erst nachträglich (s. u.).

Aus den aufgenommenen Daten wird mit Hilfe des geometrischen Modells der Bezug zwischen Tastkugel und Maschine berechnet, d. h. es wird die Lage des Mittelpunkts der Tastkugel in kartesischen Maschinenkoordinaten berechnet. Dies ist möglich, da die jeweils zu den Antastpunkten gehörige Winkelstellung und Stellung des Messsystems, d. h. der Ständer- oder Portalmechanik, bekannt ist.

Die Genauigkeit der Berechnung bei der Lernprogrammierung ist begrenzt, da die Lage im Raum nicht mit kalibrierten Winkelstellungen ermittelt wurde. Die Berechnung für die aktuelle Winkelstellung kann online während der Lernprogrammierung oder offline, d. h. nach der Lernprogrammierung, erfolgen.

Bei der sich anschließenden oder später durchzuführenden Messung bedarf es keines manuellen Eingriffs mehr.

Zur Vorbereitung der Messung werden zunächst alle Winkelstellungen aus der Liste automatisch unter Ausnutzung der bei der einzigen initialen Kalibrierung erhaltenen Werte kalibriert und die dabei erhaltenen Kalibrierdaten werden gespeichert. Ist durch Kalibrierung des Taststifts in einer Winkelstellung der Bezug zwischen Sensor und Bezugspunkt hergestellt, können auch alle anderen Winkelstellungen in ihrer räumlichen Lage grob berechnet und an der Kalibrierkugel kalibriert werden und damit die relative Lage zwischen der Tastkugel und Kalibrierkugel in den einzelnen Winkelstellungen ermittelt werden. Diese relative Lage kann zur Bestimmung der Abstände an einem zu vermessenden Objekt herangezogen werden.

Daher kann nach diesen Vorbereitungen der für die Vermessung des Werkstücks benötigte CNC-Ablauf mit Hilfe der Positionen und Winkelstellungen der Liste und der ermittelten Kalibrierdaten ohne manuellen Eingriff durchgeführt werden.

Das erfindungsgemäße Verfahren hat den weiteren großen Vorteil, dass ein Wechsel des Taststifts zwichen zwei Messabläufen oder während eines Messablaufs durch Entnahme eines anderen Taststifts aus einem Magazin möglich ist, ohne dass es dazu zwingend eines manuellen Eingriffs, etwa für eine manuelle Neukalibrierung, bedarf. Bei der Verwendung eines neuen Taststifts wird zunächst eine Winkelstellung des neuen Taststifts manuell oder vorzugsweise halbautomatisch kalibriert. Falls die Abmessungen des neuen Taststifts hinreichend genau bekannt sind, kann auch diese initiale Kalibrierung vollautomatisch ablaufen. Aus dieser initialen Kalibrierung einer einzigen Winkelstellung, z. B. der Winkelstellung 0 / 0, werden mit Hilfe des geometrischen Modells - wie oben beschrieben - die Abmessungen und Positionen des neuen Taststifts bestimmt. Die erhaltenen Werte werden gespeichert.

Danach wird der neue Taststift in allen Winkelstellungen aus der bereits vorhandenen Liste der Winkelstellungen automatisch kalibriert. Für die automatische Kalibrierung wird mit Hilfe des geometrischen Modells und der in der initialen Kalibrierung gewonnenen Daten berechnet, wo die Tastkugel in welcher Winkelstellung liegt. Daraus kann berechnet werden, welche Position die Ständer- oder Portalmechanik bzw. Pinolen einnehmen müssen, damit die Tastkugel die Kalibrierkugel antasten kann. Die automatische Kalibrierung ist nur mit Hilfe des geometrischen Modells möglich.

Die erhaltenen Kalibrierdaten für den neuen Taststift werden - wie stets - gespeichert.

Auch bei einem Wechsel des Taststifts kann die alte Winkelliste weiter verwendet werden, da aus den alten Lagen und Abmessungen des ersten Taststifts die reale Lage der Antastpunkte im Raum bzw. am Werkstück berechnet wurde. Für einen neuen Taststift, der z. B. eine andere Länge hat, können aus der realen Lage im Raum die für diesen neuen Taststift benötigten Winkelstellungen und Stellungen der ständerarme bzw. -pinolen automatisch berechnen werden - ähnlich einer Berechnung der Winkelstellungen und Positionen aus CAD-Daten. Daraus kann eine neue Liste für den CNC-Ablauf abgeleitet werden. Danach können die berechneten neuen Winkelstellungen - wie oben geschildert - automatisch kalibriert werden.

Nach diesen Vorbereitungen kann der für die Vermessung des Werkstücks benötigte CNC-Ablauf mit Hilfe der neuen Liste und der ermittelten Kalibrierdaten für den neuen Taststift durchgeführt werden.

Nach dem Stand der Technik hätte man nach einem Wechsel des Taststifts

- alle für den neuen Taststift benötigten Winkel manuell neu bestimmen müssen und
- alle neu bestimmten Winkel mindestens halbautomatisch kalibrieren müssen.

Es bestand somit bisher ein erheblicher Mehraufwand. Die Erfindung führt hier zu einer großen Erleichterung, zu Zeit- und damit Kosteneinsparung.

Vorzugsweise werden alle für die Vermessung des Werkstücks mit dem Taststift in einem CNC-Ablauf benötigten Positionen und Winkelstellungen aus CAD-Daten für das zu vermessende Werkstück berechnet, sofern CAD-Daten über das Werkstück verfügbar sind. Dadurch entfällt die manuelle Programmierung des CNC-Ablaufs mit Hilfe eines Joysticks.

Bei der Bestimmung aller für die Vermessung eines Werkstücks mit dem Taststift in einem CNC-Ablauf benötigten Positionen und Winkelstellungen können bereits bestimmte und gespeicherte, ähnliche Winkelstellungen dem Bediener zur Speicherung für die aktuell zu bestimmende Winkelstellung vorgeschlagen werden, um die Anzahl der zu kalibrierenden Winkelstellungen zu begrensen. Gleiches kann bei der Berechnung ausgehend von CAD-Daten automatisch erfolgen.

Bei der Bestimmung aller für die Vermessung eines Werkstücks mit dem Taststift in einem CNC-Ablauf benötigten Positionen und Winkelstellungen kann eine Warnung ausgegeben werden, falls die aktuell bestimmte Winkelstellung mit der derzeitigen Position eines für die Kalibrierung verwendeten Kalibriernormals nicht kalibrierbar ist. Das kann beispielsweise der Fall sein, wenn bei der Kalibrierung an einer Kalibrierkugel deren Schaft im Wege wäre. Der Programmierer des CNC-Ablaufs hat dann die Möglichkeit einen anderen, für die Messung dennoch geeigneten Antastwinkel zu wählen. Ebenso kann dies bei einer Berechnung ausgehend von CAD-Daten berücksichtigt werden.

Es kann weiterhin vorgesehen werden, die automatische Kalibrierung für Winkelstellungen nicht durchzuführen, bei denen eine Kollision mit einem Schaft eines für die Kalibrierung verwendeten Kalibriernormals möglich ist. Dieser Kollisionsschutz spart somit den Raum um den Schaft, z. B. der Kalibrierkugel, aus. Es kann dann eine Warnung vor Kollisionen mit dem Schaft des Kalibriernormals erfolgen. Die Kalibrierung kann in einem solchen Falle - falls noch möglich - von Hand mittels Joysticks erfolgen.

Grundsätzlich können alle Verfahrensschritte von einem geeigneten Koordinatenmessgerät mit einem angeschlossenen Rechner durchgeführt werden.

Bezugszeichen

10 Messtisch
12 Ständer
14 Dreh-Schwenk-Gelenk
16 Taststift
20 Auslegearm
22 zweiachsiges Dreh-Schwenk-Gelenk
24 Taststiftwechseleinrichtung
26 schaltender Messkopf
28 gerader Taststift

**Patentansprüche**

1. Verfahren zum Betreiben eines Koordinatenmessgeräts mit einem Dreh-Schwenk-Gelenk mit folgenden Schritten:

a) eine Winkelstellung eines Sensors wird kalibriert; daraus werden mit Hilfe eines geometrischen Modells des Dreh-Schwenk-Gelenks die Positionen des Sensors bestimmt und die erhaltenen Werte werden gespeichert;
b) alle für die Vermessung eines Werlcstücks mit dem Sensor in einem CNC-Ablauf benötigten Positionen und Winkelstellungen werden bestimmt und die erhaltenen Werte werden in einer Liste gespeichert;
c) alle Winkelstellungen aus der Liste werden automatisch unter Ausnutzung der in Schritt a) erhaltenen Werte kalibriert und die erhaltenen Kalibrierdaten werden gespeichert; und
d) der für die Vermessung des Werkstücks benötigte CNC-Ablauf wird mit Hilfe der Positionen und Winkelstellungen der Liste und der ermittelten Kalibrierdaten durchgeführt.

2. Verfahren nach dem vorhergehenden Anspruch mit den zusätlichen Schritten,

e) dass bei Verwendung eines neuen Sensors eine Winkelstellung des neuen Sensors kalibriert wird;
f) dass daraus die Positionen des neuen Sensors bestimmt werden und die erhaltenen Werte gespeichert werden;
g) dass der neue Sensor in allen Winkelstellungen aus der Liste automatisch unter Ausnutzung der in Schritt e) für den neuen Sensor erhaltenen Werte kalibriert wird und dass die erhaltenen Kalibrierdaten für den neuen Sensor gespeichert werden; und
h) dass der für die Vermessung des Werkstücks benötigte CNC-Ablauf mit Hilfe der Liste und der ermittelten Kalibrierdaten für den neuen Sensor durchgeführt wird.

3. Verfahren nach einem oder mehreren der vorhergehenden Ansprüche, wobei alle für die Vermessung des Werkstücks mit dem Sensor in einem CNC-Ablauf benötigten Positionen und Winkelstellungen aus CAD-Daten für das zu vermessende Werkstück berechnet werden.

4. Verfahren nach einem oder mehreren der vorhergehenden Ansprüche, wobei bei der Bestimmung aller für die Vermessung eines Werkstücks mit dem Sensor in einem CNC-Ablauf benötigten Positionen und Winkelstellungen bereits bestimmte und gespeicherte, ähnliche Winkelstellungen bei der aktuell zu bestimmenden Winkelstellung berücksichtigt werden, um die Anzahl der zu kalibrierenden Winkelstellungen zu begrenzen.

5. Verfahren nach einem oder mehreren der vorhergehenden Ansprüche, wobei bei der Bestimmung aller für die Vermessung eines Werkstücks mit dem Sensor in einem CNC-Ablauf benötigten Positionen und Winkelstellungen eine Warnung ausgegeben wird, falls die aktuell bestimmte Winkelstellung mit der derzeitigen Position eines für die Kalibrierung verwendeten Kalibriernormals nicht kalibrierbar ist.

6. Verfahren nach einem oder mehreren der vorhergehenden Ansprüche, wobei die automatische Kalibrierung für eine Winkelstellung nicht durchgeführt wird, bei der eine Kollision mit einem Schaft eines für die Kalibrierung verwendeten Kalibriernormals möglich ist.

7. Koordinatenmessgerät mit einem Dreh-Schwenk-Gelenk (22) mit:

   - ersten Mitteln zum Kalibrieren einer Winkelstellung eines Sensors (16);
   - zweiten Mitteln zum Bestimmen der Positionen des Sensors (16) mit Hilfe eines geometrischen Modells des Dreh-Schwenk-Gelenks (22) aus der Kalibrierung und mit Mitteln zum Speichern der erhaltenen Werte;
   - dritten Mitteln zum Bestimmen aller für die Vermessung eines Werkstücks mit dem Sensor (16) in einem CNC-Ablauf benötigten Positionen und Winkelstellungen und mit Mitteln zum Speichern der erhaltenen Werte in einer Liste;
   - vierten Mitteln zum automatischen Kalibrieren aller Winkelstellungen aus der Liste unter Ausnutzung der mit den ersten und zweiten Mitteln erhaltenen Werte und mit Mitteln zum Speichern der erhaltenen Kalibrierdaten; und
   - fünften Mitteln zum Durchführen des für die Vermessung des Werkstücks benötigten CNC-Ablaufs mit Hilfe der Positionen und Winkelstellungen der Liste und der ermittelten Kalibrierdaten.

**Claims**

1. A method for operating a coordinate measuring device having a rotating/pivoting joint, with the following steps:

   a) an angular position of a sensor is calibrated; the positions of the sensor are determined from this with the aid of a geometric model of the rotating/pivoting joint, and the values obtained are stored;
   b) all the positions and angular positions required for measuring a workpiece by means of the sensor in a CNC sequence are determined, and the values obtained are stored in a list;
   c) all the angular positions from the list are calibrated automatically, utilizing the values obtained in step a), and the calibration data obtained are stored; and
   d) the CNC sequence required for measuring the workpiece is carried out with the aid of the positions and angular positions of the list and the calibration data determined.

2. The method as claimed in the preceding claim, further comprising the steps

   e) that, when a new sensor is used, an angular position of the new sensor is calibrated;
   f) that the positions of the new sensor are determined from this and the values obtained are stored;
   g) that the new sensor is calibrated automatically in all the angular positions from the list, utilizing the values obtained in step e) for the new sensor, and in that the calibration data obtained for the new sensor are stored; and
   h) that the CNC sequence required for measuring the workpiece is carried out with the aid of the list and the determined calibration data for the new sensor.

3. The method as claimed in one or more of the preceding claims, wherein all the positions and angular positions required for measuring the workpiece by means of the sensor in a CNC sequence are calculated from CAD data for the workpiece to be measured.

4. The method as claimed in one or more of the preceding claims, wherein in the determination of all the positions and angular positions required for measuring a workpiece by means of the sensor in a CNC sequence, similar angular positions already determined and stored are taken into account in the angular position currently to be determined, in order to limit the number of angular positions to be calibrated.

5. The method as claimed in one or more of the preceding claims, wherein the determination of all the positions and angular positions required for measuring a workpiece by means of the sensor in a CNC sequence, a warning is emitted if the currently determined angular position cannot be calibrated by means of the present position of a calibrating standard used for calibration.

6. The method as claimed in one or more of the preceding claims, wherein automatic calibration is not carried out for an angular position in which a collision with a shank of a calibrating standard used for calibration is possible.

7. A coordinate measuring device having a rotating/pivoting joint (22), with:

   - first means for calibrating an angular position of a sensor (16);
   - second means for determining the positions of the sensor (16) from the calibration with the aid of a geometric model of the rotating/pivoting joint (22), and with means for storing the values obtained;
   - third means for determining all the positions and angular positions required for measuring a workpiece by means of the sensor (16) in a CNC sequence, and with means for storing the values obtained in a list;
   - fourth means for the automatic calibration of all the angular positions from the list, utilizing the values obtained by the first and second means, and with means for storing the calibration data obtained; and
   - fifth means for carrying out the CNC sequence required for measuring the workpiece, with the aid of the positions and angular positions of the list and the calibration data determined.

**Revendications**

1. Procédé pour faire fonctionner un appareil de mesure de coordonnées muni d'une articulation tournante et pivotante comprenant les étapes suivantes:

   a) une position angulaire d'un capteur est calibrée; les positions du capteur en sont déduites à l'aide d'un modèle géométrique de l'articulation tournante et pivotante et les valeurs obtenues sont enregistrées;
   b) toutes les positions et positions angulaires nécessaires au mesurage d'une pièce avec le capteur dans une opération de CN sont déterminées et les valeurs obtenues sont enregistrées dans une liste;
   c) toutes les positions angulaires de la liste 15 sont automatiquement calibrées en utilisant les valeurs obtenues a l'étape a) et les données de calibrage obtenues sont enregistrées; et
   d) l'opération de CN nécessaire au mesurage de la pièce est exécutée a l'aide des positions et des positions angulaires de la liste et des données de calibrage déterminées.

2. Procédé selon la revendication précédente, comprenant les étapes supplémentaires:

   e) que lors de l'utilisation d'un nouveau capteur, une position angulaire du nouveau capteur est calibrée;
   f) que les positions du nouveau capteur sont déterminées à partir de celle-ci et que les valeurs obtenues sont enregistrées;
   g) que le nouveau capteur est calibré automatiquement dans toutes les positions angulaires de la liste en utilisant les valeurs obtenues dans l'étape e) pour le nouveau capteur et que les données de calibrage obtenues pour le nouveau capteur sont enregistrées; et
   h) que l'opération de CN nécessaire pour le mesurage de la pièce est exécutée à l'aide de la liste et des données de calibrage déterminées pour le nouveau capteur.

3. Procédé selon une ou plusieurs des revendications précédentes, avec lequel toutes les positions et positions angulaires nécessaires dans une opération de CN pour le mesurage de la pièce avec le capteur sont calculées à partir des données de CAO de la pièce a mesurer.

4. Procédé selon une ou plusieurs des revendications précédentes, avec lequel, lors de la détermination de toutes les positions et positions angulaires nécessaires au mesurage d'une pièce avec le capteur dans une opération de CN, les positions angulaires similaires déjà déterminées et enregistrées sont prises en compte pour la position angulaire actuellement à déterminer afin de limiter le nombre de positions angulaires a calibrer.

5. Procédé selon une ou plusieurs des revendications précédentes, avec lequel, lors de la détermination de toutes les positions et positions angulaires nécessaires au mesurage d'une pièce avec le capteur dans une opération de CN, un avertissement est émis si la position angulaire actuellement déterminée ne peut pas être calibrée avec la position actuelle d'un étalon de calibrage utilisé pour le calibrage.

6. Procédé selon une ou plusieurs des revendications précédentes, avec lequel le calibrage automatique n'est pas effectué pour une position angulaire pour laquelle il existe une possibilité de collision avec une tige d'un étalon de calibrage utilisé pour le calibrage.

**7.** Appareil de mesure de coordonnées muni d'une articulation tournante et pivotante (22) comprenant:

des premiers moyens pour calibrer une position angulaire d'un capteur (16);

- des deuxièmes moyenspour déterminer les positions du capteur (16) a l'aide d'un modèle géométrique de l'articulation tournante et pivotante (22) à partir du calibrage et comprenant des moyens pour enregistrer les valeurs obtenues;

- des troisièmes moyens pour déterminer toutes les positions et positions angulaires nécessaires au mesurage d'une pièce avec le capteur (16) dans une opération de CN et comprenant des moyens pour enregistrer les valeurs obtenues dans une liste;

- des quatrièmes moyens pour calibrer automatiquement toutes les positions angulaires de la liste en utilisant les valeurs obtenues avec les premiers et les deuxièmes moyens et comprenant des moyens pour enregistrer les données de calibrage obtenues; et

- des cinquièmes moyens pour exécuter l'opération de CN nécessaire au mesurage de la pièce à l'aide des positions et des positions angulaires de la liste et des données de calibrage déterminées.

Fig. 1

## Programmierung

Planung der Messaufgabe
Manuelles erstellen einer Liste mit
benötigten Winkelstellungen

Abbruch Programmierung

Manuelles / halbautomatisches Kalibrieren aller benötigten Winkelstellungen

CNC Programmierung

Falls Winkelstellung fehlt

Programmierung Ende
Der CNC Ablauf wird gespeichert

## Messung

Benötigte Stellungen. müssen ermittelt werden (z.B. aus manuell erstellter Stellungsliste).

Abbruch CNC-Ablauf

Manuelles / halbautomatisches Kalibrieren aller benötigten Winkelstellungen

Laden und Start des CNC Ablaufs

Falls Winkelstellung fehlt

Messergebnis

# Fig. 2

Programmierung

Planung der Messaufgabe

Kalibrierung eines Taststifts in einer
Winkelstellung

CNC Programmierung
Alle verwendeten Winkelstellungen
werden in einer Liste gespeichert

Programmierung Ende
Der CNC Ablauf wird gespeichert
Stellungsliste wird gespeichert

Kalibrierung

Listenkalibrierung
Alle benötigten Winkelstellungen
werden kalibriert

Kalibrierdaten werden gespeichert

Messung

CNC–Ablauf und Stellungsliste
werden geladen

Kalibrierdaten werden geladen

Start des CNC-Ablaufs

Messergebnis

Fig. 3

22

20

24

26

28

Fig.4

Fig. 5